# EUROPEAN PATENT SPECIFICATION

(11) **EP 1 367 089 B1**
(45) Date of publication and mention of the grant of the patent: **18.07.2007**
(21) Application number: 03253335.8
(22) Date of filing: 28.05.2003
(51) Int. Cl.: C08J 11/28

(54) **Method of treating urethane resin, composition for recycling same, and regeneration method**
Verfahren zur Behandlung von Urethan-Harz, Zusammensetzung für dessen Recycling und Regenerations-Verfahren
Procédé de traitement de résine uréthanne, composition pour son recyclage et procédé de régénération

(30) Priority: 31.05.2002 JP 2002160515
(43) Date of publication of application: 03.12.2003
(73) Proprietor: KABUSHIKI KAISHA TOSHIBA, Tokyo 105-8001 (JP)
(72) Inventor: Fukaya, Taro, c/o Intellectual Property Division, Minato-ku, Tokyo 105-8001 (JP); Thai, Cao Minh, c/o Intellectual Property Division, Minato-ku, Tokyo 105-8001 (JP); Saya, Sioko, c/o Intellectual Property Division, Minato-ku, Tokyo 105-8001 (JP)
(74) Representative: Fairbairn, Angus Chisholm

(56) References cited:
- DE-A- 19 519 333
- DE-C- 4 116 700
- US-A- 4 115 298
- US-A- 6 020 386

## Description

### CROSS REFERENCE TO RELATED APPLICATIONS

This application is based upon and claims the benefit of priority from the prior Japanese Patent Application No. 2002-160515, filed May 31, 2002.

### BACKGROUND OF THE INVENTION

### 1. Field of the Invention

The present invention relates to a technology of recycling a urethane resin. More particularly, the present invention relates to a method of treating a urethane resin giving a resin decomposed substance from which a regenerated resin is easily produced, a treated composition for recycling, and a method of regenerating a resin from the composition.

### 2. Description of Related Art

Urethane resin has been used widely, for example, as insulation materials of refrigerators, construction materials, cushioning materials and the like. Recently, there has been an enhanced desire for recycling these wastes, and recycling of these wastes has been studied in various industrial fields. However, urethane resins are thermosetting resins having a three dimensional network structure. Therefore, recycling thereof is difficult, and disposals such as reclamation and incineration and the like have been conventionally conducted.

Various reports have long been made on methods of chemically decomposing a urethane resin. Japanese Patent Application Publication (JP-B) No. 42-10634 discloses a method in which a polyurethane foam is decomposed with an amine compound such as an alkanolamine and the like, then, the decomposed substance is separated and recovered. However, it is very difficult to separate an amine compound and a polyol showing excellent compatibility, therefore, this method is not suitable industrially. Japanese Patent Application Laid-Open (JP-A) No. 6-184513 discloses a method in which a polyurethane foam is decomposed using a polyol and aminoethanol as a decomposing agent, and recycled as an adhesive aid. When an urethane foam is decomposed by using an amine singly, there is a problem that a crystal derived from the amine appears, and there is a significant difficulty in regenerating a resin. Even if a polyurethane form is decomposed by other methods than those described above, a large amount of amine is contained in the urethane decomposed substance, and this works as a catalyst in reacting with an isocyanate and/or epoxy resin to regenerate a resin, consequently, the reaction progresses steeply, leading to difficulty in generation of a resin.

As the method of consuming an amine in a decomposed substance for deactivation, there is known a method in which a urethane resin is decomposed with a compound obtained by alcolating an alcohol with an alkali metal, and an alkylene oxide such as propylene oxide or the like is added to the decomposed substance. See, for example, Japanese Patent Application Laid-Open (JP-A) No.53-6038. However, the decomposed substance obtained in this method contains a urea group-containing compound and/or 2-oxazolidone, and these compounds are decomposed by an alkali metal hydroxide if present in the reaction system, to generate a carbonate salt, causing a significant problem. Japanese Patent No. 3242723 discloses a method in which a hard polyurethane foam is decomposed in a monoalkanolamine having 2 to 3 carbon atoms to obtain a decomposition solution, and an alkylene oxide is added to this solution in the presence of an amine catalyst. However, in this case, even if an amino group in the decomposition solution can be de-activated, the added amine catalyst works also as a catalyst for urethane formation, therefore, an effect of resin decomposition is reduced by half. Since propylene oxide, which is frequently used as the alkylene oxide, is a substance designated as a special inflammable, specific process designs are required.

US-A-6,020,386, DE-A-4 116 700, DE-A-19 519 333 and US-A-4,115,298 disclose further methods for decomposing and/or regenerating urethane resins.

### BRIEF SUMMARY OF THE INVENTION

Conventionally, although there are methods of decomposing a urethane resin, the resulting decomposed substance is difficult to be regenerated due to an amine present therein, and it is difficult to remove an amine in the decomposed substance. Therefore, there have been great difficulties in decomposition and regeneration of a urethane resin.

The present invention has been accomplished in view of the problems as described above. Accordingly, the present invention provides a method of treating a urethane resin giving a urethane resin decomposed substance which reactivity in regenerating a resin is suppressed and from which a resin can be easily regenerated; a treated substance ; and a method of regenerating a resin, as defined in the claims herein.

According to one embodiment of the invention, the method of treating a urethane resin comprises a first step of decomposing a urethane bond of a urethane resin to obtain a resin decomposed substance, and a second step of adding a compound having one carbonyl group and one hydroxyl group as a treating agent, to the above-mentioned resin decomposed substance.

As production raw materials of regenerated resins, there are provided treated substances comprising reaction products which are obtained by reacting an amino group contained in a resin decomposed substance prepared by decomposing a urethane bond in a urethane resin with a compound having one carboxyl group and one hydroxyl group; namely compositions for recycling.

According to another embodiment of the invention, the method of regenerating a resin comprises a first step of obtaining a resin decomposed substance in which a urethane bond in a urethane resin is decomposed, a second step of adding a compound having one carboxyl group and one hydroxyl group as a treating agent, to the above-mentioned resin decomposed substance, and a third step of adding an epoxy resin or isocyanate compound to the composition for regeneration obtained in the second step to produce a resin.

According the present invention, a reaction in producing a regenerated resin from a urethane resin decomposed substance is appropriately suppressed, and a regeneration operation can be conducted easily. Resultantly, recycling of a urethane resin can be promoted.

### BRIEF DESCRIPTION OF THE SEVERAL VIEWS OF THE DRAWINGS

Figure 1 is a schematic sectional view showing one embodiment of a treating apparatus of carrying out a method of treating a urethane resin.
Figure 2 is a graph showing the relation between lactic acid addition amount and gel time in regenerating a resin when lactic acid is used as a treating agent for a urethane resin decomposed substance.
Figure 3 is a graph showing the relation between mixture ratio of a decomposed substance in regenerating a resin and rise time.

### DETAILED DESCRIPTION OF THE INVENTION

In cutting a urethane bond of a urethane resin by a known decomposition method, an amine, that is a compound having an amino group is generated though the extent varies depending on the difference in decomposition methods. When an amino compound is used as a decomposing agent in decomposition, this remains in a urethane resin decomposed substance. For suppressing steep increase in reaction speed in regenerating a resin from a urethane resin decomposed substance owing to an amino group contained in the urethane resin decomposed substance, in the present invention, reactivity ascribable to an amino group in the resin decomposed substance is lowered by using a compound having one carboxyl group and one hydroxyl group, as a treating agent, and reacting the amino group and the treating agent.

Further, the action of the treating agent causes substantial conversion from an amino group into a hydroxyl group, together with de-activation of an amino group. Conversion into a hydroxyl group from an end amino group of a molecule contained in a resin decomposed substance is an effective factor in forming a bond in regeneration of a resin.

Via the above-mentioned treatment, amino groups in a resin decomposed substance decrease. Further, depending on the kind of a treating agent, an end amino group of a molecule is converted into a hydroxyl group, therefore, a treated substance containing a resulting resin decomposed substance has reactivity more suppressed than that of a non-treated resin decomposed substance, showing an excellent property of generating a resin easily.

The present invention will be illustrated in detail below.

### 1. Urethane Resin Decomposed Substance

The urethane resin which is to be decomposed may be any urethane resin providing it has a urethane bond or urea bond. Examples thereof include rigid polyurethane foam, flexible polyurethane foam, semi-rigid urethane, urethane elastomer and the like. Further, isocyanurate resin having an isocyanurate bond is also possible to be used.

Useful for decomposition of a urethane resin are a chemical decomposition method using a decomposing agent, hydrolysis method, or thermal decomposition method, and resin decomposed substances obtained by any decomposition method can be used for application of the invention. Since treatment speed is slow or stable quality is not obtained in decomposition methods other than the chemical decomposition method, the chemical decomposition method is practically advantageous. As the decomposing agent used in the chemical decomposition method, for example, amine compounds, polyol compounds and alkali metal alcoholates thereof, are listed, and listed as the use embodiment are, for example, amine compound alone, polyol compound or metal alcoholate of polyol alone, mixing of amine compound and polyol compound or metal alcoholate of polyol. The present invention is suitable for application of a resin decomposed substance according to a decomposition method using an amine compound or polyol compound, and particularly, the present invention is suitable when decomposed using an amine compound (using amine compound alone, or mixture of amine compound and polyol compound).

Examples of the amine compound which may be used include monoethanolamine, diethanolamine, triethanolamine, ethylenediamine, tetramethylenediamine, hexamethylenediamine, propanediamine, 2-ethylhexylamine, isopropanolamine, 2-(2-aminoethylamino)ethanol, 2-amino-2-hydroxymethyl-1,3-propanediol, ethylaminoethanol, aminobutanol, n-propylamine, di-n-propylamine, n-amylamine, isobutylamine, methyldiethylamine, cyclohexylamine, piperazine, piperidine, aniline, toluidine, benzylamine, phenylenediamine, xylenediamine, chloroaniline, pyridine, picoline, N-methylmorpholine, ethylmorpholine and pirazole.

Examples of the polyol compound include ethylene glycol, diethyleneglycol, propyleneglycol, trimethylene glycol, 1,4-butanediol, 1,5-pentanediol, 1,6-hexanediol, polyoxyethylene glycol, polyoxypropylene glycol, glycerin, and polyethylene glycol.

Such a decomposing agent is mixed with a urethane resin, and if necessary, heated to a temperature in the range from 100 to 300 °C, to obtain a urethane resin decomposed substance. As to the temperature, when lower than this, the decomposition time is too long undesirably. When higher than this, thermal decomposition of a urethane resin itself initiates undesirably. Further, it is preferable to heat the mixture at a temperature from about 150 to 280 °C.

### 2. Treating Agent

By reacting a urethane resin decomposed substance with a treating agent, activity by an amino group contained in the resin decomposed substance is lowered by reactions such as amidation of the amino group. Used as the treating agent is a compound having one carboxyl group (-COOH) and one hydroxyl group as functional groups. A plurality of different compounds may be used in combination as the treating agent. The molecule structure of parts other than the functional groups of the treating agent is not particularly restricted providing it does not disturb the action of the functional groups.

Selection of the treating agent is not defined indiscriminately since it depends on the use of the regenerated resin. However, when the decomposed substance is utilized as a decomposed material which is in liquid form under room temperature (for example polyol used for the regeneration into a urethan resin), the compounds, which have only one carboxyl group in the molecule, are preferable. The reason for this is that poly-functional compounds increase the molecular weight, causing a possibility of disturbing in regeneration (compounds that has an unsaturated carbon linkage such as acrylic acid and metha acrylic acid are excluded, however, since in this case it is likely that polymerization proceeds and the molecular weight increases).

As the compound (halogenated acyl) having a haloformyl group (-CO-X, wherein X represents a halogen) as a functional group, any of those derived from compounds having a carboxyl group can be used. Examples thereof include acetyl chloride, acryloyl chloride, o-anisoyl chloride, benzoyl chloride, 4-tert-butylbenzoyl chloride, n-butylyl chloride, chloroacetyl chloride, lauroyl chloride, propionyl chloride, and p-tolyoyl chloride.

Since the compounds used as a treating agent also have a hydroxyl group in the molecule, the molecule end of an amine in a resin decomposed substance can be converted from an amino group into a hydroxyl group, therefore, they can be utilized like polyols. As such compounds, for example, compounds classified as hydroxy acids such as hydroxybenzoic acid are listed, and there are a lot of natural substances classified into this group. For example, glycolic acid, lactic acid, gluconic acid, and salicylic acid are listed. These substances have optical isomers because it their structures, however, it is not necessary to take them into consideration. For example, any of D form, L form and DL form of lactic acid may be used without problems. Of the above-mentioned compounds, which have one carboxyl group and one hydroxyl group, glycolic acid and lactic acid are particularly preferably used. If the number of functional groups at the end varies, there is a possibility of change in physical properties in regenerating a resin. Lactic acid can be purchased at low cost, and further, basically provides no problems such as environmental pollution and the like, therefore, lactic acid is one of candidates for industrially important treating agents.

### 3. Addition Amount and Reaction Conditions of Treating Agent

The desirable ratio of reacting a treating agent differs depending on the number of functional groups and the equivalent of a compound. Since the treating agent is a compound having only one carboxyl group, the treating agent can be added without specific restriction. Preferably, the amount of the treating agent based on 100 parts by weight of a urethane resin decomposed substance is from 1 to 100 parts by weight, more preferably from 5 to 50 parts by weight. It is desirable to add it at a stoichiometric ratio just causing reaction with amino groups in the resin decomposed substance. The amount of an amino group in the resin decomposed substance can be checked as an amine value determined according to known measuring methods (for example, JIS K 7237). When the addition amount of a treating agent is too small, an amino group cannot be sufficiently inactivated. When the addition amount of a treating agent is larger than the stoichiometric ratio, excess portion acts as a diluting agent, and no problems occur, however, it is desirable to avoid extreme excess amount since there is a possibility of disturbing the cross-linking reaction of an epoxy resin or isocyanate added later for regeneration of a resin.

The object of addition a treating agent is to control the speed of the reaction of a urethane resin decomposed substance and a regenerating agent (epoxy resin or isocyanate) in production of a regenerated resin from a resin decomposed substance carried out thereafter. Therefore, it is necessary that the addition of a treating agent is effected before addition of a regenerating agent and a sufficient reaction with a resin decomposed substance is conducted. When a regenerating agent is added simultaneously with addition of a treating agent or added when a sufficient reaction is not yet conducted, the reaction speed cannot be decreased, and a sufficient effect cannot be obtained.

The temperature at which a treating agent is allowed to act on a resin decomposed substance is appropriately set, depending on demands, within the range from room temperature to about 300 °C. When the temperature is higher than 300 °C, a phenomenon that the main chain of a polymer contained in a resin decomposed substance is cut, and the like is likely to occur, and cause a change in its properties. This temperature is preferably from 80 to 250 °C, further preferably from 100 to 250 °C. When the temperature is lower than 80 °C, evaporation of water generated by the reaction is not promoted, and the reaction delays. Though the treatment time varies depending on the kind of a treating agent and the treatment temperature, it could be confirmed that the reaction can be completed generally in the range from 10 minutes to 3 hours when the treatment is conducted at temperatures from about 80 to 250 °C. When the treatment time is shorter, a sufficient reaction is not achieved. When heated for an excessively longer period of time, the properties of a resin decomposed substance change due to the influence of thermal decomposition.

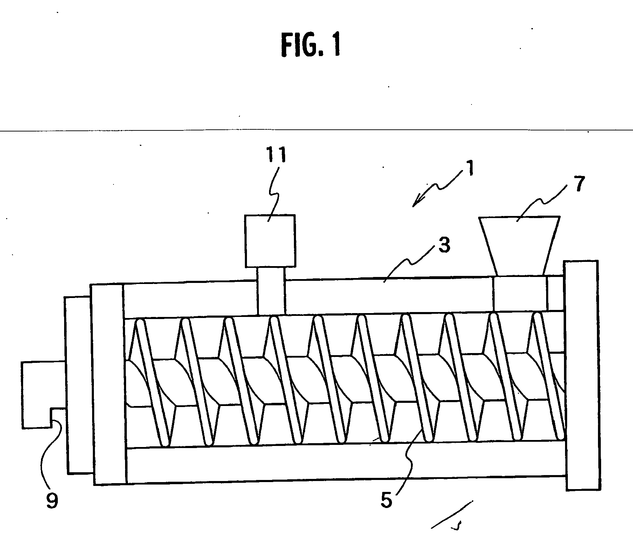

Decomposition of a urethane resin and treatment with a treating agent can be efficiently conducted continuously if conducted using, for example, extruder 1 as shown in Fig. 1. Extruder 1 has cylinder portion 3 equipped with a temperature controllable heater, rotation controllable screw 5 in contact with the inner wall of cylinder portion 3, input port 7 provided at one end of cylinder portion 3, discharge port 9 provided at another end of cylinder portion 3, and a supply port 11 provided between input port 7 and discharge port 9. A heater of cylinder portion 3 can be set so that temperatures of cylinder portion 3 vary locally, and for example, heating temperature can be changed before and after supply port 11.

The temperature of cylinder portion 3 is set at the decomposition temperature of a urethane resin, and the rotation speed of screw 5 is set so that the time during which an input substance into the extruder progresses from input port 7 to supply port 11 by rotation of screw 5 corresponds to the time required for the decomposition of a urethane resin. When a urethane resin and a decomposing agent are input through input port 7 , the decomposition of the urethane resin initiates, and the resin moves toward the direction of discharge port 9. A treating agent is supplied through supply port 11 to a urethane resin decomposed substance, and a treated substance after completion of treatment is discharged from discharge port 9.

When extruder 1 is used, a mixture of a urethane resin and a decomposing agent is kneaded between the inner wall of extruder 1 and screw 5. Since decomposition treatment can be effected under condition closely adhered to the inner wall of cylinder portion 3 and the surface of screw 5, conduction of heat for heating can be effected quickly. By discharge from extruder 1, cooling after the decomposition treatment can also be conducted quickly. Therefore, when extruder 1 is used, the decomposition treatment of a urethane resin can be progressed while easily and correctly controlling the temperature of a reaction product. In contrast, for example, an article such as a pan shows poor conduction of heat, and needs a longer period of time for raising and lowering temperature. Further, quick discharge like in extruder 1 is not obtained, and cooling needs a longer period of time.

### 4. Regenerant: Epoxy Resin and Isocyanate Compound

The epoxy resin and isocyanate compound used as a regenerant for regenerating a resin from a urethane resin decomposed substance can be selected from known compounds and used, depending on demands. The epoxy resin may be a compound having two or more epoxy groups in one molecule and is not particularly restricted. Specific examples thereof include bisphenol A type epoxy resin, bisphenol F type epoxy resin, phenol novolak type epoxy resin, cresol novolak type epoxy resin, naphtol-based novolak type epoxy resin, novolak type epoxy resin of bisphenol A, naphthalenediol type epoxy resin, alicyclic epoxy resin, epoxy resin derived from tri or tetra (hydroxyphenyl) alkane, bishydroxybiphenyl-based epoxy resin, and epoxidized substance of phenolaralkyl resin. These epoxy compound can be used singly or in admixture of two or more. The isocyante compound may be one having two or more isocyanate groups in one molecule, and is not particularly restricted. Specific examples thereof include diisocyanate compounds such as 1,5-naphthalene diisocyanate, 4,4'-diphenylmethane diisocyanate, 4,4'-diphenyldimethylmethane diisocyanate, 4,4'-dibenzyl isocyanate, dialkyldiphenylmethane diisocyanate, tetraalkyldiphenylmethane diisocyanate, 1,3-phenylene diisocyanate, 1,4-phenylene diisocyanate, tolylene diisocyanate, butane-1,4-diisocyanate, hexamethylene diisocyanate, 2,2,4-trimethylhexamethyelene diisocyanate, cyclohexane-1,4-diisocyanate, xylylene diisocyanate, isophorone diisocyanate, pyridine diisocyanate, dicyclohexylmethane-4,4-diisocyanate, and methylcyclohexane diisocyanate, poly-functional isocyanate compounds such as dimethylenetriphenylmethane tetraisocyanate, triphenylmethane triisocyanate, and polymethylenepolyphenyl polyisocyanate; addition products of polyols such as glycerin, and trimethylolpropane with the above-mentioned isocyanate compounds. These isocyanate compounds may be use singly or in admixture of two or more.

### 5. Regeneration of Resin

A liquid composition for regeneration after treatment of a urethane resin decomposed substance with the above-mentioned treating agent is regenerated as a resin by appropriate molding after mixing of the above-mentioned regenerating agent. The molding method is appropriately determined depending on demands.

For example, when a liquid epoxy resin is used as a regenerating agent, a treated substance and an epoxy resin are mixed using an all around mixer, the mixture is cast into a mold at temperatures from room temperature to 200 °C, and hardened by heating for about 1 hour to over night, to obtain a regenerated resin. In mixing, organic particles or inorganic particles may be added as a filler, or a plasticizer or coupling agent may be compounded.

When a urethane foam is produced, an isocyanate compound is added to and mixed with a treated substance, and bond formation and foaming progress at a speed corresponding to temperature, therefore, a mixture is input into a mold at temperatures of from about room temperature to 80 °C and molded. If necessary, a polyol compound which is a urethane resin raw material, and a foaming agent, foam controlling agent, filler or catalyst may be added to a treated substance.

When a solid substance obtained by solidifying a treated substance of a urethane resin decomposed substance by cooling is used, this solid substance, solid epoxy resin or isocyanate compound is finely ground and mixed with a wood powder or inorganic filler, and molded under heat and pressure using a press molding machine, to give a molded body. The hardening temperature is advantageously from about 80 to 200 °C in general, though varying depending on the melting point or softening point of a urethane resin decomposed substance, epoxy resin and isocyanate compound used.

### EXAMPLES

The present invention will be illustrated in detail below based on examples.

### PREPARATION OF URETHANE RESIN DECOMPOSED SUBSTANCE

Urethane resin decomposed substances A to H described below were prepared.

### Decomposed Substance A

A urethane resin which is a refrigerator heat insulation material, and diethanolamine were mixed at a weight mixture ratio of 3.2:1 and input into a twin-screw extruder heated at 230 °C, and reacted by mixing under heat for 3 minutes, to obtain liquid viscous at room temperature. This urethane resin decomposed substance A had an amine value of 159 mg KOH/g.

### Decomposed Substance B

A urethane decomposed substance was produced under the same conditions as in the production of urethane resin decomposed substance A except that the heating temperature was 300 °C and the mixing time was 2 minutes. Liquid viscous at room temperature was obtained. This urethane resin decomposed substance B had an amine value of 165 mg KOH/g.

### Decomposed Substance C

A urethane decomposed substance was produced under the same conditions as in the production of urethane resin decomposed substance A except that the heating temperature was 350 °C and the mixing time was 2 minutes. Liquid viscous at room temperature was obtained, however, vapor was blown out significantly from the outlet of the extruder, and resultantly, discharge of a decomposed substance was also unstable. This urethane resin decomposed substance C had an amine value of 168 mg KOH/g.

### Decomposed Substance D

A urethane resin which is a cushion material, and monoethanolamine were mixed at a weight mixture ratio of 2.5:1 and input into a twin-screw extruder heated at 170 °C, and reacted by mixing under heat for 3 minutes, to obtain liquid viscous at room temperature. This urethane resin decomposed substance D had an amine value of 139 mg KOH/g.

### Decomposed Substance E

A urethane decomposed substance was produced under the same conditions as in the production of urethane resin decomposed substance D except that the heating temperature was 150 °C and the mixing time was 5 minutes. Liquid viscous at room temperature was obtained. This urethane resin decomposed substance E had an amine value of 140 mg KOH/g.

### Decomposed substance F

A urethane decomposed substance was produced under the same conditions as in the production of urethane resin decomposed substance D except that the heating temperature was 100 °C and the mixing time was 20 minutes. Liquid viscous at room temperature was obtained. This urethane resin decomposed substance F had an amine value of 133 mg KOH/g.

### Decomposed Substance G

A urethane resin which is a refrigerator heat insulation material, and diethanolamine and polyethylene glycol were mixed at a weight mixture ratio of 3:1:2 and input into a single-screw extruder heated at 250 °C, and reacted by mixing under heat for 3 minutes, to obtain liquid viscous at room temperature. This urethane resin decomposed substance G had an amine value of 101 mg KOH/g.

### Decomposed Substance H

A urethane resin which is a refrigerator heat insulation material, and an alcoholate prepared by reacting 200 parts by weight of metal sodium with 100 parts by weight of polyethylene glycol (#200) were mixed at a weight mixture ratio of 3:1 and input into a single-screw extruder heated at 250°C, and reacted by mixing under heat for 3 minutes, to obtain a decomposed substance which was washed with water to retrieve only an organic layer, giving liquid viscous at room temperature. This urethane resin decomposed substance H had an amine value of 89.2 mg KOH/g.

Production conditions for the above-mentioned urethane resin decomposed substances are summarized in Table 1.

**Table 1**

| Urethane Resin Decomposed Substance | A | B | C | D | E | F | G | H |
|---|---|---|---|---|---|---|---|---|
| Urethane Resin | Refrigerator | Refrigerator | Refrigerator | Cushion | Cushion | Cushion | Refrigerator | Refrigerator |
| Decomposing Agent (1) | Diethanol amine | Diethanol amine | Diethanol amine | Monoethanolamine | Monoethanolamine | Monoethanolamine | Diethanol amine | Polyethylene glycol #200 |
| Decomposing Agent (2) | - | - | - | - | - | - | Polyethylene glycol #200 | Metal sodium |
| Decomposition Ratio: Urethane/Decomposing Agent (1)/Decomposing Agent (2), | 3.2/1/0 | 3.2/1/0 | 3.2/1/0 | 2.5/1 /0 | 2.5/1 /0 | 2.5/1 /0 | 3/1/2 | 3/0.3/0 .67 |
| Decomposition Temperature (°C) | 230 | 300 | 350 | 170 | 150 | 100 | 250 | 250 |
| Decomposition Time (min.) | 3 | 2 | 2 | 3 | 5 | 20 | 3 | 3 |
| Amine Value (mg KOH/g) | 159 | 165 | 168 | 139 | 140 | 133 | 101 | 89.2 |

### EXAMPLE 1

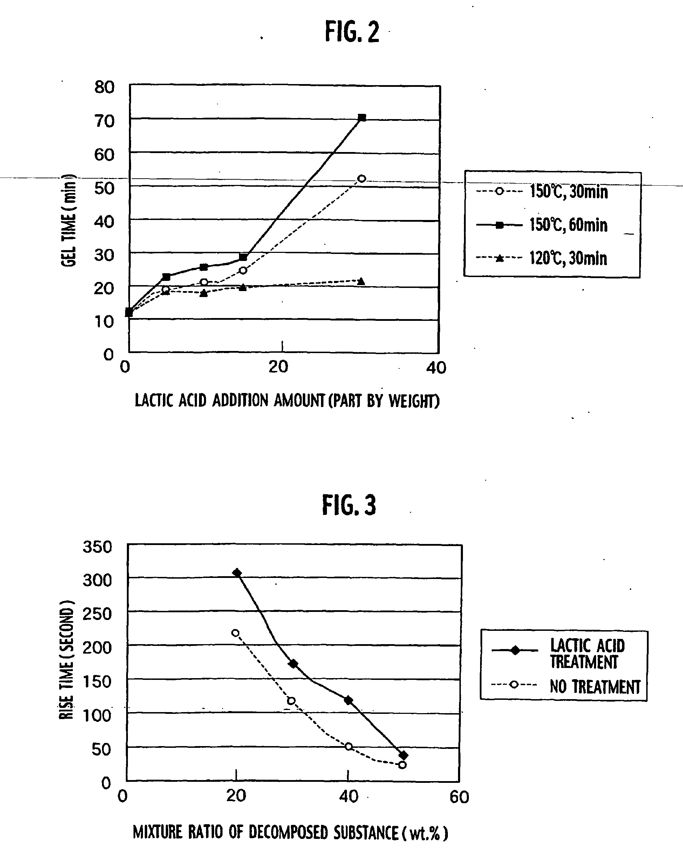

A mixture of 100 parts by weight of urethane decomposed substance A and DL-lactic acid (purity: 90%) of an amount shown in Table 3 was reacted at 80 °C for 180 minutes, 120°C for 30 minutes, 150 °C for 30 minutes, 150 °C for 60 minutes, 250 °C for 10 minutes or 300 °C for 10 minutes, using an oil bath. The resulted reaction product and a bisphenol A type epoxy resin (product No.: EP4100E) were mixed at a weight mixture ratio of 1/1, and heated in an oil bath at 100 °C, and gel time was measured. The results are shown in Table 3 and Fig. 2.

As apparent from Table 3, those obtained with treatment show significantly elongated gel time as compared with a resin decomposed substance obtained without lactic acid treatment.

**Table 3**

| Lactic acid treatment Temperature/Time | Gel time (min.) Part by weight of lactic acid | | | | |
|---|---|---|---|---|---|
| (°C/min.) | 0 | 5 | 10 | 15 | 30 |
| 80/180 | 13 | 18 | 19 | 19 | 25 |
| 150/30 | 12.5 | 19 | 21 | 24.5 | 52 |
| 150/60 | 12 | 23 | 26 | 29 | 71 |
| 120/30 | 13 | 18.75 | 18.5 | 2 | 22 |
| 250/10 | 13 | 20 | 21 | 31 | 66 |
| 300/10 | 12 | 19 | 19 | 28 | 64 |

### EXAMPLE 2

The treated substance obtained by treating urethane resin decomposed substance A with lactic acid at 150 °C for 60 minutes in Example 1 was mixed with a polyol mixture (hydroxyl group value = 381 mg KOH/g) used as a raw material of a urethane resin for refrigerator heat insulation material, at mixture ratio (wt% based on total amount) shown in Table 4. giving 100 parts by weight, and to this was added 90 parts by weight of a polymeric MDI-based isocyanate mixture (%NCO = 31.4) used as a raw material of a urethane resin for refrigerator heat insulation material, and the mixture was stirred at high speed to produce a foam.

### COMPARATIVE EXAMPLE 1

A product was obtained in the same manner as in Example 5 excepting that urethane resin decomposed substance A had not been treated with lactic acid and used, as Comparative Example 1.

The relationship between the mixture ratio of the decomposed substance and rise time in Example 2 and Comparative Example 1 is shown in Table 4 and Fig. 3.

As apparent from Table 4, those obtained with lactic acid treatment show significantly elongated rise time showing reaction time, and thus could suppress reactivity, as compared with that obtained without treatment.

**Table 4**

| Mixture Ratio of Decomposed Substance | Rise Time (second) | |
|---|---|---|
| | Example 2 | Comparative Example 1 |
| 20wt.% | 304 | 215 |
| 30wt.% | 171 | 116 |
| 40wt.% | 117 | 51 |
| 50wt.% | 41 | 26 |

### EXAMPLE 3

100 parts by weight of urethane decomposed substance B and 10 parts by weight of lactic acid were treated at 150 °C for 60 minutes to obtain a reaction product of which gel time was measured in the same manner as in Example 1. The gel time was 19.75 minutes.

### COMPARATIVE EXAMPLE 2

A product was obtained under the same conditions as in Example 3 except that urethane decomposed substance B which had not been treated with lactic acid was used, and the gel time of the product was measured to find that it was 10.75 minutes. This gel time was shorter as compared with Example 3.

### EXAMPLE 4

100 parts by weight of urethane decomposed substance C and 10 parts by weight of lactic acid were treated at 150 °C for 60 minutes to obtain a reaction product of which gel time was measured in the same manner as in Example 1. The gel time was 21.25 minutes.

### COMPARATIVE EXAMPLE 3

A product was obtained under the same conditions as in Example 4 except that urethane decomposed substance E which had not been treated with lactic acid was used, and the gel time of the product was measured to find that it was 13 minutes. This gel time was shorter as compared with Example 4.

### EXAMPLE 5

100 parts by weight of urethane resin decomposed substance D and 5 parts by weight of lactic acid were reacted at 150 °C for 60 minutes. 10 parts by weight of this product obtained by treating urethane decomposed substance D with lactic acid and 90 parts by weight of a polyol mixture (the hydroxyl group value being 56 mg KOH/g, and containing a foaming agent and a foam controlling agent) which is used as a raw material of a urethane resin for cushion material were mixed, and to this was added 25 parts by weight of a polymeric MDI-based isocyanate mixture (%NCO = 44.5) which is used as a raw material of a urethane resin for cushion material, and the mixture was stirred at high speed to produce a foam. The rise time was 3 minutes and 40 seconds. A flexible foam could be obtained.

### COMPARATIVE EXAMPLE 4

A foam was tried to be produced under the same conditions as in Example 5 except that the urethane decomposed substance D which had not been treated with lactic acid was used, as a result, a phenomenon that shrinking occurs after once foaming was observed, and a satisfactory foam could not be obtained. The rise time was 2 minutes and 30 seconds.

### EXAMPLE 6

100 parts by weight of urethane resin decomposed substance E and 10 parts by weight of lactic acid were treated at 150 °C for 60 minutes to obtain a reaction product which was mixed with a bisphenol A type epoxy resin (Product No.: EP4100E, manufactured by Asahi Denka Kogyo K.K.) at a weight mixture ratio of 1/1, and heated in an oil bath at 100 °C, and gel time was measured. The gel time was 19.25 minutes.

### COMPARATIVE EXAMPLE 5

A product was obtained under the same conditions as in Example 6 except that urethane decomposed substance E which had not been treated with lactic acid was used, and the gel time of the product was measured to find that it was 13 minutes.

### EXAMPLE 7

100 parts by weight of urethane resin decomposed substance F and 10 parts by weight of lactic acid were treated at 150 °C for 60 minutes to obtain a reaction product of which gel time with epoxy resin was measured in the same manner as in Example 6. The gel time was 21 minutes.

### COMPARATIVE EXAMPLE 6

A product was obtained under the same conditions as in Example 6 except that urethane decomposed substance F which had not been treated with lactic acid was used, and the gel time of the product was measured to find that it was 12.5 minutes.

### EXAMPLE 8

100 parts by weight of urethane resin decomposed substance G and 10 parts by weight of DL-lactic acid (purity: 90%) were mixed, and heated at 150 °C for 1 hour using an oil bath. The resulted liquid was mixed with a polyol mixture (hydroxyl group value = 381 mg KOH/g) used as a raw material of a,urethane resin for refrigerator heat insulation material, at mixture ratio (wt. % based on total amount) shown in Table 5, giving 100 parts by weight, and to this was added 90 parts by weight of a polymeric MDI-based isocyanate mixture (% NCO = 31.4) used as a raw material of a urethane resin for refrigerator heat insulation material, and rise time in this operation was measured. The resulted value is shown in Table 5.

### COMPARATIVE EXAMPLE 7

100 parts by weight of urethane resin decomposed substance G was mixed with a polyol mixture (hydroxyl group value = 381 mg KOH/g) used as a raw material of a urethane resin for refrigerator heat insulation material, at mixture ratio (wt. % based on total amount) shown in Table 5, and to 100 parts by weight of the resulted mixture was added 90 parts by weight of a polymeric MDI-based isocyanate mixture (%NCO = 31.4) used as a raw material of a urethane resin for refrigerator heat insulation material, and the mixture was stirred at high speed to produce a foam, and rise time in this operation was measured. The resulted value is shown in Table 5.

**Table 5**

| Mixture Ratio of | Rise time (second) | |
|---|---|---|
| Decomposed Substance | Example 8 | Comparative Example 7 |
| 20wt% | 431 | 303 |
| 30wt% | 239 | 166 |
| 40wt% | 165 | 70 |
| 50wt% | 57 | 45 |

### EXAMPLE 9

100 parts by weight of urethane resin decomposed substance Hand 10 parts by weight of DL-lactic acid (purity: 90%) were mixed, and heated at 150 °C for 1 hour using an oil bath. The resulted liquid was mixed with a polyol mixture (hydroxyl group value = 381 mg KOH/g) used as a raw material of a urethane resin for refrigerator heat insulation material, at mixture ratio (wt.% based on total amount) shown in Table 6, giving 100 parts by weight, and to this was added 90 parts by weight of a polymeric MDI-based isocyanate mixture (%NCO = 31.4) used as a raw material of a urethane resin for refrigerator heat insulation material, and the mixture was stirred at high speed to produce a foam, and rise time in this operation was measured. The resulted value is shown in Table 6.

### COMPARATIVE EXAMPLE 8

100 parts by weight of urethane resin decomposed substance H was mixed with a polyol mixture (hydroxyl group value = 381 mg KOH/g) used as a raw material of a urethane resin for refrigerator heat insulation material, at mixture ratio (wt.% based on total amount) shown in Table 6, and to 100 parts by weight of the resulted mixture was added 90 parts by weight of a polymeric MDI-based isocyanate mixture (%NCO = 31.4) used as a raw material of a urethane resin for refrigerator heat insulation material, and the mixture was stirred at high speed to produce a foam, and rise time in this operation was measured. The resulted value is shown in Table 6.

**Table 6**

| Mixture. Ratio of Decomposed Substance | Rise time (second) | |
|---|---|---|
| | Example 9 | Comparative Example 8 |
| 20wt% | 540 | 368 |
| 30wt% | 302 | 207 |
| 40wt% | 200 | 92 |
| 50wt% | 73 | 55 |

### EXAMPLE 10

100 parts by weight of urethane resin decomposed substance A and 10 parts by weight of salicylic acid were mixed, and heated at 150 °C for 60 minutes using an oil bath. The product obtained was mixed with a polyol mixture (hydroxyl group value = 381 mg KOH/g) used as a raw material of a urethane resin for refrigerator heat insulation material, at mixture ratio (wt.% based on total amount) shown in Table 7. To 100 parts by weight of the resulted mixture was added 90 parts by weight of a polymeric MDI-based isocyanate mixture (%NCO = 31.4) used as a raw material of a urethane resin for refrigerator heat insulation material, and the mixture was stirred at high speed to produce a foam, and rise time in this operation was measured. The resulted value is shown in Table 7.

The rise time, which indicates reaction time, elongated significantly, and thus could suppress reactivity, as compared with that obtained without treatment in Comparative Example 1.

**Table 7**

| Mixture Ratio of Decomposed Substance | Rise time (second) |
|---|---|
| | Exp. 10 |
| 20wt. % | 312 |
| 30wt. % | 186 |
| 40wt.% | 134 |
| 50wt.% | 97 |

## Claims

1. A method of treating a urethane resin, comprising:
decomposing a urethane bond of the urethane resin to obtain a resin decomposed substance, and
adding a treating agent to the resin decomposed substance, the treating agent being a compound having one carboxyl group and one hydroxyl group.

2. The method according to claim 1, wherein the decomposition is conducted by adding an amine compound or polyol compound to the urethane resin while heating at 100 to 300 °C, and the addition of the treating agent is conducted at 300 °C or less.

3. The method according to claim 1, wherein the treating agent is lactic acid or salicylic acid.

4. The method according to claim 1, wherein the decomposition is conducted in a process of extruding the urethane resin charged in an extruder out of the extruder.

5. A composition for recycling a urethane resin, comprising a reaction product obtainable by reacting an amino group contained in a resin decomposed substance with a treating agent, wherein the resin decomposed substance is an intermediate product prepared by decomposing a urethane bond in the urethane resin, and the treating agent is a compound having one carboxyl group and one hydroxyl group.

6. The composition according to claim 5, wherein the treating agent is lactic acid or salicylic acid.

7. A method of regenerating a resin from a urethane resin, comprising:
decomposing a urethane bond in the urethane resin to obtain a resin decomposed substance;
adding a treating agent to the resin decomposed substance, to obtain a composition for recycling, the treating agent being a compound having one carboxyl group and one hydroxyl group; and
adding an epoxy resin or isocyanate compound to the composition for recycling, to regenerate a resin.

8. The method according to claim 7, wherein the decomposition is conducted by adding an amine compound or polyol compound to the urethane resin while heating at 100 to 300 °C, and the addition of the treating agent is conducted at 300 °C or less.

9. The method according to claim 7, wherein the treating agent is lactic acid or salicylic acid.

10. The method according to claim 7, wherein the decomposition is conducted in a process of extruding the urethane resin charged in an extruder out of the extruder.

## Patentansprüche

1. Verfahren zur Behandlung eines Urethanharzes, umfassend:
Zersetzen einer Urethanbindung des Urethanharzes, um eine zersetzte Harzsubstanz zu erhalten, und
Zugeben eines Behandlungsmittels zu der zersetzten Harzsubstanz, wobei das Behandlungsmittel eine Verbindung mit einer Carboxylgruppe und einer Hydroxylgruppe ist.

2. Verfahren gemäß Anspruch 1, wobei die Zersetzung durch Zugeben einer Aminverbindung oder Polyolverbindung zu dem Urethanharz durchgeführt wird, während bei 100 bis 300°C erwärmt wird, und die Zugabe des Behandlungsmittel bei 300°C oder weniger durchgeführt wird.

3. Verfahren gemäß Anspruch 1, wobei das Behandlungsmittel Milchsäure oder Salicylsäure ist.

4. Verfahren gemäß Anspruch 1, wobei die Zersetzung in einem Prozeß des Extrudierens des in einen Extruder gefüllten Urethanharzes aus dem Extruder durchgeführt wird.

5. Zusammensetzung zum Recycling eines Urethanharzes, umfassend ein Reaktionsprodukt erhältlich durch Umsetzen der in einer zersetzen Harzsubstanz enthaltenen Aminogruppe mit einem Behandlungsmittel, wobei die zersetzte Harzsubstanz ein Zwischenprodukt hergestellt durch Zersetzen einer Urethanbindung in dem Urethanharz ist, und das Behandlungsmittel eine Verbindung mit einer Carboxylgruppe und einer Hydroxylgruppe ist.

6. Zusammensetzung gemäß Anspruch 5, wobei das Behandlungsmittel Milchsäure oder Salicylsäure ist.

7. Verfahren zum Wiedergewinnen eines Harzes aus einem Urethanharz, umfassend:
Zersetzen einer Urethanbindung in dem Urethanharz, um eine zersetzte Harzsubstanz zu erhalten;
Zugeben eines Behandlungsmittels zu der zersetzen Harzsubstanz, um eine Zusammensetzung zum Recycling zu erhalten, wobei das Behandlungsmittel eine Verbindung mit einer Carboxylgruppe und einer Hydroxylgruppe ist; und
Zugeben eines Epoxyharzes oder einer Isocyanatverbindung zu der Zusammensetzung zum Recycling, um ein Harz wiederzugewinnen.

8. Verfahren gemäß Anspruch 7, wobei die Zersetzung durch Zugabe einer Aminverbindung oder Polyolverbindung zu dem Urethanharz durchgeführt wird, während bei 100 bis 300°C erwärmt wird, und die Zugabe des Behandlungsmittels bei 300°C oder weniger durchgeführt wird.

9. Verfahren gemäß Anspruch 7, wobei das Behandlungsmittel Milchsäure oder Salicylsäure ist.

10. Verfahren gemäß Anspruch 7, wobei die Zersetzung in einem Prozeß des Extrudierens des in einen Extruder gefüllten Urethanharzes aus dem Extruder durchgeführt wird.

## Revendications

1. Procédé de traitement d'une résine d'uréthane comprenant :
la décomposition d'une liaison uréthane de la résine d'uréthane pour obtenir une substance décomposée de résine, et
l'addition d'un agent de traitement à la substance décomposée de résine, l'agent de traitement étant un composé ayant un groupe carboxyle et un groupe hydroxyle.

2. Procédé selon la revendication 1 où la décomposition est conduite par addition d'un composé amine ou d'un composé polyol à la résine d'uréthane tout en chauffant à 100 à 300°C, et l'addition de l'agent de traitement est conduite à 300°C ou moins.

3. Procédé selon la revendication 1 où l'agent de traitement est l'acide lactique ou l'acide salicylique.

4. Procédé selon la revendication 1 où la décomposition est conduite dans un procédé d'extrusion de la résine d'uréthane chargée dans une extrudeuse hors de l'extrudeuse.

5. Composition pour recycler une résine d'uréthane comprenant un produit réactionnel pouvant être obtenu par réaction d'un groupe amino contenu dans une substance décomposée de résine avec un agent de traitement, où la substance décomposée de résine est un produit intermédiaire préparé par décomposition d'une liaison uréthane dans la résine d'uréthane et l'agent de traitement est un composé ayant un groupe carboxyle et un groupe hydroxyle.

6. Composition selon la revendication 5 où l'agent de traitement est l'acide lactique ou l'acide salicylique.

7. Procédé de régénération d'une résine à partir d'une résine d'uréthane, comprenant :
la décomposition d'une liaison uréthane dans la résine d'uréthane pour obtenir une substance décomposée de résine ;
l'addition d'un agent de traitement à la substance décomposée de résine pour obtenir une composition pour le recyclage, l'agent de traitement étant un composé ayant un groupe carboxyle et un groupe hydroxyle ; et
l'addition d'une résine époxyde ou d'un composé isocyanate à la composition pour le recyclage, pour régénérer une résine.

8. Procédé selon la revendication 7 où la décomposition est conduite par addition d'un composé amine ou d'un composé polyol à la résine d'uréthane tout en chauffant à 100 à 300°C, et l'addition de l'agent de traitement est conduite à 300°C ou moins.

9. Procédé selon la revendication 7 où l'agent de traitement est l'acide lactique ou l'acide salicylique.

10. Procédé selon la revendication 7 où la décomposition est conduite dans un procédé d'extrusion de la résine d'uréthane chargée dans une extrudeuse hors de l'extrudeuse.
